**Europäisches Patentamt**

**European Patent Office**

**Office européen des brevets**

(11) Veröffentlichungsnummer: **0 130 268**
A1

(12) **EUROPÄISCHE PATENTANMELDUNG**

(21) Anmeldenummer: **83890110.6**

(51) Int. Cl.⁴: **B 23 C 5/22**

(22) Anmeldetag: **05.07.83**

---

(43) Veröffentlichungstag der Anmeldung: **09.01.85**
Patentblatt 85/2

(84) Benannte Vertragsstaaten: **AT DE FR GB IT**

(71) Anmelder: **GFM Gesellschaft für Fertigungstechnik und Maschinenbau Gesellschaft m.b.H., Ennserstrasse 14, A-4403 Steyr (AT)**

(72) Erfinder: **Kirchberger, Peter, Dipl.-Ing., Schulgasse 3, Haag (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

---

(54) **Messerkopf.**

(57) Ein Messerkopf besteht aus einem scheibenförmigen Grundkörper (1), der umfangsseitig mit Messerhaltern (2) bestückt ist, wobei jeder Messerhalter (2) wenigstens zwei Messerplättchen (5) aufnimmt. Zur Messerplättchenbefestigung dient ein Spannbolzen (7, 7'), der in einer Messerhalterbohrung (6) sitzt und die Messerplättchen (5) mit seinem Kopfteil (8, 8') gegen den Messerhalter (2) klemmt.

Um bei Verwendung ungelochter Messerplättchen (5) eine aufwandsarme, rationelle Messerplättchenbefestigung zu erreichen, weist der Kopfteil (8, 8') Klemmansätze (9) zum gleichzeitigen Fixieren wenigstens zweier nebeneinander gelagerter Messerplättchen (5) auf, wobei der Kopfteil (8, 8') durch Schrägstellen gegenüber der Spannbolzenachse beim Verspannen an die vorhande Messerplättchenlage angepaßt wird.

- 1 -

## Messerkopf

Die Erfindung betrifft einen Messerkopf, bestehend aus einem scheibenförmigen Grundkörper mit umfangsseitig angeordneten, jeweils wenigstens zwei Messerplättchen aufnehmenden Messerhaltern, welche Messerplättchen zwischen Messerhalter und Kopfteil eines in einer Messerhalterbohrung sitzenden Spannbolzens festklemmbar sind.

Um einen Messerkopf mit möglichst vielen Messerplättchen bestücken zu können, gibt es bereits Messerhalter, die jeweils zwei oder mehrere quadrat- oder dreieckförmige Messerplättchen kassettenartig aufnehmen, wobei aus Platzgründen und zur Ausbildung eines entsprechenden Spanraumes für die Messerplättchenbefestigung an den Messerhaltern eine Bolzenverbindung gewählt wird. Allerdings sind dazu bisher gelochte Messerplättchen erforderlich, die jeweils einzeln mit eigenen Schraubenbolzen am Messerhalter verspannt werden. Abgesehen von der Schwächung der Messerplättchen durch die Lochung und den dadurch bedingten erhöhten Herstellungsaufwand erlaubt die Dimension der Messerplättchen nur den Einsatz recht kleiner Schraubenbolzen, die einem großen Verschleiß unterworfen sind und außerdem nur eine geringe Klemmkraft mit sich bringen. Die Handhabung dieser Schraubverbindung ist dabei äußerst mühsam, was zu einem arbeitsintensiven, zeitraubenden Messerplättchenwechsel führt.

Der Erfindung liegt daher die Aufgabe zugrunde, diese Mängel zu beseitigen und einen Messerkopf der eingangs geschilderten Art zu schaffen, der die Verwendung ungelochter Messerplättchen erlaubt und zudem eine aufwandsarme, rationelle Messerplättchenbefestigung mit gewünschter Klemmkraft für die Messerplättchen gewährleistet.

Die Erfindung löst diese Aufgabe dadurch, daß der Kopfteil messerhalterseitig freigestellte Klemmansätze zum gleichzeitigen Fixieren wenigstens zweier nebeneinander gelagerter Messerplättchen aufweist und durch Schrägstellen gegenüber der Spannbolzenachse beim Verspannen an die vorhandene Messerplättchenlage anpaßbar ist. Mit einem Spannbolzen können daher gleich zwei oder drei Messerplättchen festgeklemmt werden, wobei sich der Kopfteil mit seinen Klemmansätzen an den Messerplättchen selbst und bei zwei Messerplättchen auch am Messerhalter abstützt, indem durch das axiale Verspannen über den Spannbolzen eine Anpassung des Kopfteiles an die Lage der Abstützstellen erfolgt und die gewünschte gleichmäßige Klemmung aller Messerplättchen erreicht wird. Da der Kopfteil die Messerplättchen vom Rand her übergreift, sind keine Lochungen der Messerplättchen mehr erforderlich, und es genügt auch ein gemeinsamer Spannbolzen für zwei oder drei Messerplättchen. Es wird nicht nur

0130268

- 3 -

der Herstellungs- und Konstruktionsaufwand für die Messerplättchen und die Messerplättchenbefestigung gesenkt, sondern auch eine wesentliche Vereinfachung und Verkürzung des Messerplättchenwechsels erreicht.

Eine besonders vibrationssichere Befestigungsmöglichkeit ergibt sich, wenn erfindungsgemäß ein glatter, mit dem Kopfteil einstückiger Spannbolzen vorgesehen ist, der axial verschiebbar in der Messerhalterbohrung sitzt, wobei die Bohrung den Spannbolzen im Öffnungsbereich mit radialem Spiel aufnimmt und zum Spannen eine eigene, im spitzen Winkel an einer Ansatzkerbe des Spannbolzens angreifende Spannschraube dient. Über die Spannschraube läßt sich der Spannbolzen axial verschieben und zum Spannen in die Bohrung hineinziehen, wobei das radiale Spiel im Öffnungsbereich der Messerhalterbohrung ein Verbiegen des Spannbolzens erlaubt, wodurch der Kopfteil entsprechend der Abstützstellen schräggestellt und an die Messerplättchenlage angepaßt wird. Es kommt zu einem Verspannen des Spannbolzens innerhalb der Messerhalterbohrung und, durch die Spannschraube gesichert, wird der gewünschte, vibrationsfeste Klemmsitz für die Messerplättchen erreicht.

Ist erfindungsgemäß dem als Kopfschraube ausgebildeten Spannbolzen ein loser, ringförmiger Kopfteil zugeordnet, der mit einerAnsenkung den Schraubenkopf aufnimmt, entsteht eine besonders rationelle Befestigungsmöglichkeit der Messerplättchen, da mit einfachem Einschrauben einer gemeinsamen Kopfschraube die nebeneinander liegenden Messerplättchen gleichzeitig festgeklemmt werden, wobei sich der bewegliche Kopfteil durch seine Schrägstellung schwierigkeitslos an die Lage der Abstützstellen anpaßt.

In der Zeichnung ist der Erfindungsgegenstand rein schematisch dargestellt, und zwar zeigen

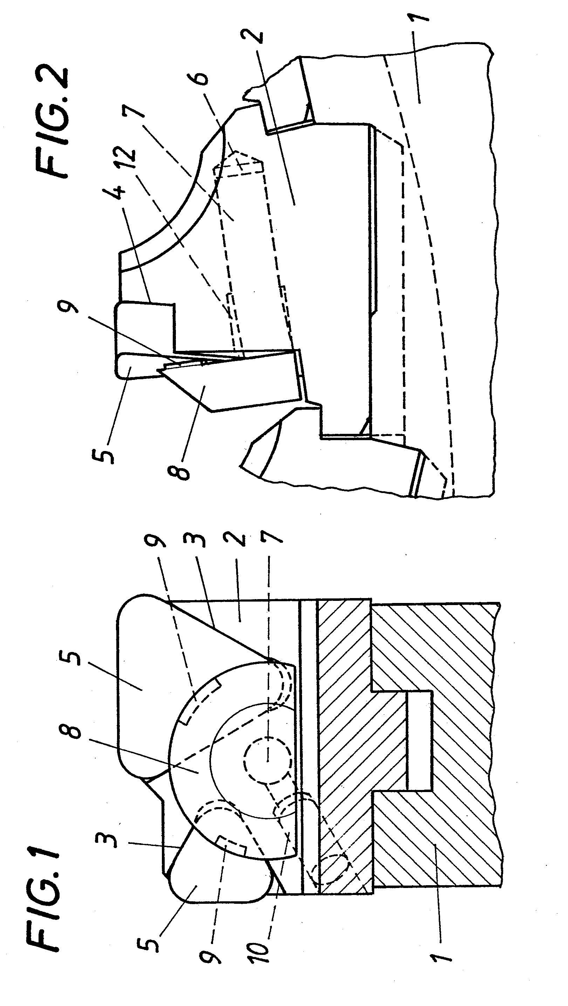

Fig. 1 einen im Grundkörper eingesetzten Messerhalter in teilgeschnittener Vorderansicht,

Fig. 2 den Messerhalter gemäß Fig. 1 in Seitenansicht und

Fig. 3 diesen Messerhalter in Draufsicht sowie

Fig. 4 einen gegenüber dem Ausführungsbeispiel nach Fig. 1 bis 3 abgeänderten Spannbolzen für die Messerplättchenbefestigung.

Im scheibenförmigen Grundkörper 1 eines erfindungsgemäßen Messerkopfes sind entlang des Umfanges verteilt Messerhalter 2 eingesetzt, die Auflager und Stützflächen 3, 4 zur kassettenartigen Aufnahme von jeweils zwei dreieckigen Messerplättchen 5 bilden. Zur Befestigung beider Messerplättchen 5 dient ein gemeinsamer, in einer Messerhalterbohrung 6 sitzender Spannbolzen 7, der einen Kopfteil 8 mit an der Unterseite freigestellten Klemmansätzen 9 für die beiden Messerplättchen 5 aufweist. Zum Spannen gibt es eine eigene Spannschraube 10, die spitzwinkelig gegen den Spannbolzen 7 in den Messerhalter 2 eingeschraubt wird, an einer Ansatzkerbe 11 des Spannbolzens 7 angreift und den Spannbolzen axial in die Messerhalterbohrung 6 hineinzieht. Dadurch stützen sich die Klemmansätze 9 an den Messerplättchen ab und verbiegen den Kopfteil 8 gegenüber der Achse des Spannbolzens 7, bis eine gleichmäßige Abstützung des Kopfteiles 8 erreicht ist, wobei ein erweiterter Öffnungsbereich 12 der Messerhalterbohrung 6 dieses Verbiegen des Spannbolzens 7 zur Schrägstellung des Kopfteils 8 ermöglicht.

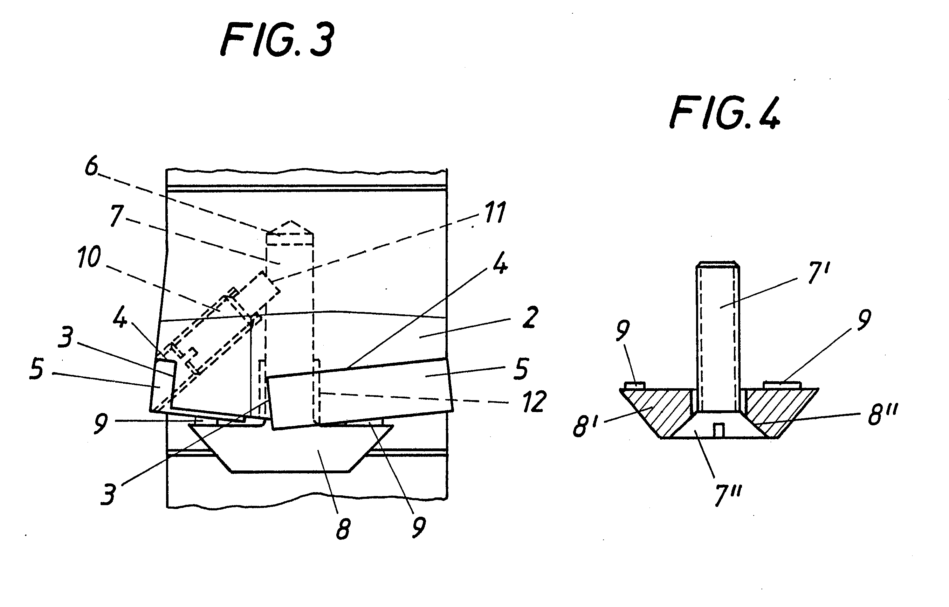

Wie in Fig. 4 angedeutet, kann der Spannbolzen auch als Kopfschraube 7' ausgebildet sein, dem ein loser, ringförmiger Kopfteil 8' zugeordnet ist. Hier greift der Schraubenkopf 7" in eine Ansenkung 8" des Kopfteiles 8' ein, was die Schrägstellung des Kopfteiles 8' gegenüber der Kopfschraube 7' erlaubt. Auch hier sind freigestellte Klemmansätze 9 an der Unterseite des Kopfteiles 8' vorgesehen, die sich an den festzuklemmenden Messerplättchen abstützen und dabei das Ausrichten des Kopfteiles 8' für ein gleichmäßiges Klemmen aller Plättchen bewirken.

Patentansprüche:

1. Messerkopf, bestehend aus einem scheibenförmigen Grundkörper (1) mit umfangsseitig angeordneten, jeweils wenigstens zwei Messerplättchen (5) aufnehmenden Messerhaltern (2), welche Messerplättchen (5) zwischen Messerhalter (2) und Kopfteil (8, 8') eines in einer Messerhalterbohrung (6)sitzenden Spannbolzens (7, 7') festklemmbar sind, dadurch gekennzeichnet, daß der Kopfteil (8, 8') messerhalterseitig freigestellte Klemmansätze (9) zum gleichzeitigen Fixieren wenigstens zweier nebeneinander gelagerter Messerplättchen (5) aufweist und durch Schrägstellen gegenüber der Spannbolzenachse beim Verspannen an die vorhandene Messerplättchenlage anpaßbar ist.

2. Messerkopf nach Anspruch 1, dadurch gekennzeichnet, daß ein glatter, mit dem Kopfteil (8) einstükkiger Spannbolzen (7) vorgesehen ist, der axial verschiebbar in der Messerhalterbohrung (6) sitzt, wobei die Bohrung (6) den Spannbolzen (7) im Öffnungsbereich (12) mit radialem Spiel aufnimmt und zum Spannen eine eigene, im spitzen Winkel an einer Ansatzkerbe (11) des Spannbolzens (7) angreifende Spannschraube (10) dient.

3. Messerkopf nach Anspruch 1, dadurch gekennzeichnet, daß dem als Kopfschraube (7') ausgebildeten Spannbolzen ein loser, ringförmiger Kopfteil (8') zugeordnet ist, der mit einer Ansenkung (8") den Schraubenkopf (7") aufnimmt.

FIG.4

FIG.3

**EUROPÄISCHER RECHERCHENBERICHT**

0130268

Nummer der Anmeldung

EP 83 89 0110

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 842 158 (GFM-GESELLSCHAFT FÜR FERGIGUNGSTECHNIK UND MASCHINENBAU AG) * Seite 14, Zeile 7 - Seite 15, Zeile 29; Anspruch 7; Figuren 7-9 * | 1 | B 23 C 5/22 |
| | --- | | |
| A | US-A-2 716 799 (BADER) * Spalte 1, Zeile 42 - Spalte 2, Zeile 2; Figuren 1,2 * | 1,2 | |
| | --- | | |
| A | AT-B- 283 849 (GESELLSCHAFT FÜR FERTIGUNGSTECHNIK UND MASCHINENBAU GMBH) * Anspruch 1; Figur 1 * | 1 | |
| | --- | | **RECHERCHIERTE SACHGEBIETE (Int. Cl. ³)** |
| A | US-A-3 156 031 (LUNDGREN) * Spalte 2, Zeile 70 - Spalte 3, Zeile 20; Figuren 4,5 * | 1,3 | B 23 B 27/16 B 23 C 3/06 B 23 C 5/00 |
| | --- | | |
| A | DE-B-1 260 926 (HERTEL) * Figuren 3,4 * | 2 | |
| | --- | | |
| A | DE-U-7 924 899 (HERTEL et al.) * Figur 3 * | 2 | |
| | --- | | |
| A | AT-B- 259 328 (FAGERSTA BRUKS AB) * Seite 1, Zeile 34 - Seite 2, Zeile 33; Figur 3 * | 2 | |
| | --- -/- | | |

Der vorliegende Recherchenbericht wurde für alle Patentansprüche erstellt.

| Recherchenort BERLIN | Abschlußdatum der Recherche 22-02-1984 | Prüfer MARTIN A E W |
|---|---|---|

Europäisches
Patentamt

**EUROPÄISCHER RECHERCHENBERICHT**

0130268

Nummer der Anmeldung

EP 83 89 0110

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 705 801 (UGINE ACIERS) <br> * Seite 8, Zeilen 27-31; Figuren 3,4 * <br><br> ----- | 3 | |

RECHERCHIERTE SACHGEBIETE (Int. Cl. ³)

Der vorliegende Recherchenbericht wurde für alle Patentansprüche erstellt.

| Recherchenort <br> BERLIN | Abschlußdatum der Recherche <br> 22-02-1984 | Prüfer <br> MARTIN A E W |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82